# EUROPEAN PATENT APPLICATION

(11) **EP 2 014 902 A2**
(43) Date of publication of application: **14.01.2009**
(21) Application number: 08159927.6
(22) Date of filing: 08.07.2008
(51) Int. Cl.: F02M 21/02

(54) **Method and device for cleaning reciprocating engines**

(30) Priority: 09.07.2007 IT MI20071358
(71) Applicant: Autochem Italiana S.r.l., 42100 Reggio Emilia (IT); Rail S.p.A., 42030 Vezzano s/c (RE) (IT)
(72) Inventor: Montebarocci, Iora, 40128, Bologna (IT)
(74) Representative: Ripamonti, Enrico

(57) **Abstract**

A method for cleaning reciprocating engines fed with fuel in the gaseous state, wherein a predetermined quantity of cleaning liquid is mixed with said fuel within a conduit (28) in a region downstream of a pressure reducer (22) and upstream of at least one injector (25) while said gaseous fuel flows through said conduit (28) to feed said engine while running.

## Description

The present invention relates to a method and device for cleaning reciprocating engines. In particular it relates to a method and device for cleaning the injectors of a reciprocating engine fed with fuel of gaseous type such as LPG or methane.

Many engine-driven vehicles are known to provide for a double feed in the form of liquid fuel (for example petrol) and gaseous fuel (LPG or methane). A number of supplementary gaseous fuel injectors equal to the number of vehicle cylinders are installed, the vehicle being operated either with petrol or with gas at the user's choice.

After such vehicles have travelled a certain number of kilometres, the impurities inevitably present in the gas flowing through the injectors and into the intake manifold deposit on this latter and within the engine, to hence reduce efficiency. The engine and injectors must therefore be cleaned, as is done for petrol engines. In the known art a determined quantity of injector wash liquid is fed into the methane and LPG tank. This known art presents the considerable drawback that only a minimum part of the wash liquid reaches the gas injectors, most of it depositing on the bottom of the tank, to hence make the injector and engine cleaning ineffective.

An object of the present invention is to provide a method and device for cleaning reciprocating engines which allows improved injector and engine cleaning.

This and other objects are attained by a method and device in accordance with the technical teachings of the accompanying claims.

Further advantages will be apparent from the description of a preferred but non-exclusive embodiment of the device and method illustrated in the accompanying drawings, in which:
Figure 1 is a section through the device of the present invention,
Figure 2 is a schematic view of a circuit for feeding gaseous fuel to an engine of conventional type.

With reference to said figures, these show a cleaning device indicated by 1. It presents a body 2 in which a first passage (or portion) 3 of convergent section is provided, connected via a throat 4 to a second passage (or portion) 5 of divergent section. This configuration is known as a venturi. Each of the two passages is associated with a connector 6 connected via a suitable thread 6A to the body 2. Each of said connectors enables the device 1 to be connected to a conduit feeding gaseous fuel to the injectors. Within the body 2 a further passage 7 is provided opening via a port 8 into the convergent portion 3 or into the throat 4 of the venturi. This further passage 7 is connected to a connector 9 through which wash liquid is fed into the venturi from a liquid vessel suitably connected to the connector 9. A non-return valve 10 can be advantageously provided to prevent the gas present in the venturi from reaching the wash liquid vessel.

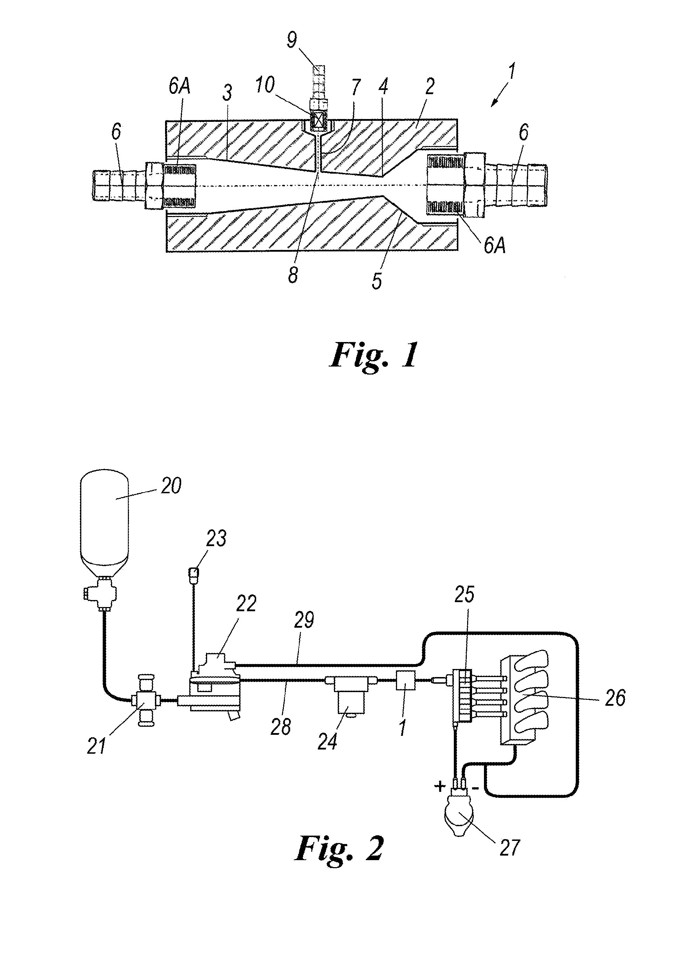

The invention operates in the following manner. With reference to Figure 2, which schematically shows a conventional system for feeding methane gas to a reciprocating engine (not shown), a tank 20 is provided connected to a high pressure solenoid valve 21 itself connected to a pressure reducer 22 with relative temperature sensor 23. From the reducer a gas delivery line 28 extends, within which a filter 24 and the device 1 are connected in series. Downstream of the device 1 the group of injectors 25 is present opening into the intake manifold 26 of the engine (not shown). A regulator line 29 for the reducer 22 is also present, conventionally associated with a pressure sensor 27.

When in use, the device 1 is inserted in the position shown in Figure 2 by disconnecting the delivery line 28 from the injectors and inserting the device just before the injectors; the venturi hence becomes part of the delivery line 28 through which the fuel gas flows.

It should be noted that independently of the type of fuel stored in the tank 20, which can be liquefied (LPG) or in the gaseous state (methane) the fuel is always in the gaseous state in the line 28 downstream of the pressure reducer 22 (and hence in the venturi), in contrast to the case of liquid fuels such as petrol or diesel oil.

The connector 9 is then connected to a vessel containing pressurized wash liquid. By way of example, the vessel can be of the type marketed by the firm AUTOCHEM with the symbol "CM01", connected to an air compressor and provided with an outlet pressure regulator, or "CMA wave" where an electric pump withdraws the liquid from a vessel, to feed it to the inlet of the connector 9; a cock associated with a microdispenser is connected to the vessel or pump outlet, enabling the flow of wash liquid through the connector 9 and hence through the port 8 to be adjusted. Essentially the engine is started in the usual manner; the wash liquid vessel (not shown) is pressurized to about 1.5-2 bar gauge and is connected by a transparent tube to the connector 9. Advantageously in this situation the gaseous fuel does not flow out of the venturi, being intercepted by the non-return valve 10. The cock of the vessel is opened and the microdispenser adjusted until the wash fluid is seen to flow through the tube. If with the microdispenser fully open there is no flow, the pressure in the wash liquid vessel is increased.

As already stated, the liquid is fed into the convergent portion of the venturi where the fluid pressure is in diminution whereas the velocity increases. This condition, followed by pressure recovery within the divergent portion of the venturi enables the liquid to mix perfectly with the gas, to the extent that experimental tests have shown that even those injectors further from the device 1 are perfectly wetted with liquid.

In an alternative embodiment the port is located at the venturi throat 4. Moreover the passage 7 or port 8 can be sized to provide homogeneous predetermined flow.

## Claims

1. A method for cleaning reciprocating engines fed with fuel in the gaseous state, wherein a predetermined quantity of cleaning liquid is mixed with said fuel within a conduit downstream of a portion and upstream of at least one injector while said gaseous fuel flows through said conduit to feed said engine while running.

2. A method as claimed in claim 1, wherein said mixing takes place between said injector and a filter.

3. A method as claimed in claim 1, wherein said liquid is mixed by a venturi through which said gas flows.

4. A method as claimed in claim 3, wherein liquid is injected into the convergent portion of a venturi.

5. A method as claimed in claim 1, wherein a non-return valve is provided at the point of injection of said liquid.

6. A method as claimed in claim 1, wherein said predetermined liquid quantity is a liquid flow.

7. A device for cleaning reciprocating engines fed with fuel in the gaseous state, comprising a venturi presenting connectors for connection to a circuit for feeding the engine with said fuel in the gaseous state, and means for feeding a cleaning liquid into said venturi.

8. A device as claimed in claim 7, wherein said feed means comprise a port provided in a convergent portion of said venturi.

9. A device as claimed in claim 8, wherein said port is intercepted by a non-return valve to prevent the fuel from flowing back into a conduit feeding said cleaning liquid.

10. A device as claimed in claim 8, wherein said port is a sized passage.

11. A device as claimed in claim 7, wherein said device comprises a pressure vessel for containing said cleaning liquid to be fed into the venturi.
